# EUROPEAN PATENT APPLICATION

(11) **EP 3 009 600 A1**
(43) Date of publication of application: **20.04.2016**
(21) Application number: 15188953.2
(22) Date of filing: 08.10.2015
(51) Int. Cl.: F01D 5/20

(54) **GAS TURBINE ENGINE TURBINE BLADE WITH COOLED TIP**

(30) Priority: 14.10.2014 US 201462063528 P
(71) Applicant: United Technologies Corporation, Hartford, CT 06101 (US)
(72) Inventor: SPANGLER, Brandon W., Vernon, CT Connecticut 06066 (US); BURSTYNSKI, Laurie L., South Windsor, CT Connecticut 06074 (US)
(74) Representative: Hull, James Edward

(57) **Abstract**

An airfoil (78; 178; 278) for a gas turbine engine (20) includes pressure and suction walls (86, 88) that are spaced apart from one another and joined at leading and trailing edges (82, 84) to provide an airfoil (78; 178; 278) that has an exterior surface that extends in a radial direction (R) to a tip (80; 180; 280). A film cooling hole (94) is provided in the tip (80; 180; 280) and extends at an angle relative to the radial direction (R). The film cooling hole (94) includes a diffuser (98).

## Description

### BACKGROUND

This disclosure relates to a gas turbine engine. More particularly, the disclosure relates to a tip cooling configuration for an airfoil.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Turbine blades typically include internal cooling passages. Film cooling holes communicate cooling fluid from the cooling passages to areas on the exterior surface of the turbine blade that may experience undesirably high temperatures.

One high temperature area is the tip of the airfoil. A proposed cooling configuration uses a notch circumscribed about at least a portion of the perimeter of the airfoil at the tip, which provides a tip shelf. In some airfoils, the shelf includes film cooling holes.

### SUMMARY

In one exemplary embodiment, an airfoil for a gas turbine engine includes pressure and suction walls that are spaced apart from one another and joined at leading and trailing edges to provide an airfoil that has an exterior surface that extends in a radial direction to a tip. A film cooling hole is provided in the tip and extends at an angle relative to the radial direction. The film cooling hole includes a diffuser.

In a further embodiment of the above, the airfoil has a cooling passage arranged between the pressure and suction walls and extends toward the tip. The cooling hole fluidly interconnects the cooling passage and the tip.

In a further embodiment of any of the above, multiple cooling holes are provided in the tip along a chord-wise direction.

In a further embodiment of any of the above, the film cooling hole includes a metering portion that extends along an axis. The axis and radial direction are arranged at an acute angle.

In a further embodiment of any of the above, the diffuser is spaced from a pressure side exterior airfoil surface.

In a further embodiment of any of the above, the diffuser includes first and second faces that respectively provide inner and outer corners with the tip. The inner corner is arranged farthest from and the outer corner arranged nearest to the pressure side exterior airfoil surface. The first face is at an obtuse angle with the metering portion.

In a further embodiment of any of the above, the second face is arranged linearly relative to the metering portion and at a greater angle relative to the radial direction than the first face.

In a further embodiment of any of the above, the diffuser breaks the tip at a perimeter that is generally rectangular in shape and has a length and a width. The length, which is greater than the width, extends in the chord-wise direction.

In a further embodiment of any of the above, the tip includes a shelf. The diffuser is spaced from the shelf.

In another exemplary embodiment, an airfoil for a gas turbine engine includes pressure and suction walls that are spaced apart from one another and joined at leading and trailing edges to provide an airfoil having an exterior surface that extends in a radial direction to a tip. A shelf is provided in at least one of the pressure and suction side walls at the tip. A film cooling hole is provided in the shelf and extends at an angle relative to the radial direction. The film cooling hole includes a diffuser.

In a further embodiment of the above, the airfoil has a cooling passage that is arranged between the pressure and suction walls that extends toward the tip. The cooling hole fluidly interconnects the cooling passage and the shelf.

In a further embodiment of any of the above, multiple cooling holes are provided in the shelf along a chord-wise direction.

In a further embodiment of any of the above, the shelf is arranged on the pressure wall.

In a further embodiment of any of the above, the shelf is spaced from the trailing edge.

In a further embodiment of any of the above, the shelf is spaced from the leading edge.

In a further embodiment of any of the above, the film cooling hole includes a metering portion that extends along an axis. The axis and radial direction are arranged at an acute angle.

In a further embodiment of any of the above, the shelf includes first and second adjoining surfaces that extend in a chord-wise direction. The first surface extends in an airfoil thickness direction. The second surface extends in the radial direction. The diffuser is provided in the first surface.

In a further embodiment of any of the above, the diffuser includes first and second faces that respectively provide inner and outer corners with the first surface. The inner corner is arranged near the second surface. The outer corner is arranged near the pressure side exterior airfoil surface. The first face is at an obtuse angle with the metering portion.

In a further embodiment of any of the above, the second face is arranged linearly relative to the metering portion and at a greater angle relative to the radial direction than the first face.

In a further embodiment of any of the above, the diffuser breaks the first surface at a perimeter that is generally rectangular in shape and has a length and a width. The length is greater than the width and the length extends in the chord-wise direction.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment;
Figure 2A is a perspective view of the airfoil having the disclosed cooling passage;
Figure 2B is a plan view of the airfoil illustrating directional references;
Figure 3 is a perspective view of tip cooling features of a turbine blade;
Figure 4 is a cross-sectional taken along lines 4-4 of Figure 3;
Figure 5 is a cross-sectional taken along lines 5-5 of Figure 3;
Figure 6 is a cross-section, similar to Figure 4, with another example film cooling hole arrangement; and
Figure 7 is a cross-section, similar to Figure 4, with another example film cooling hole arrangement.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

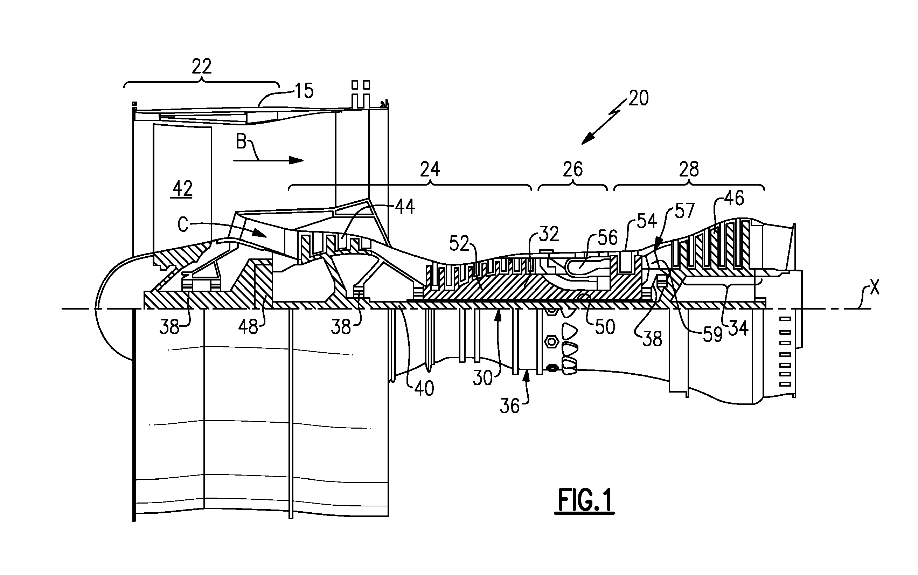

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach (272 m/s) and about 35,000 (10.7 km) feet. The flight condition of 0.8 Mach (272 m/s) and 35,000 ft (10.7km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/s).

The disclosed serpentine cooling passage may be used in various gas turbine engine components. For exemplary purposes, a turbine blade 64 is described. It should be understood that other shapes of cooling passage may also be used.

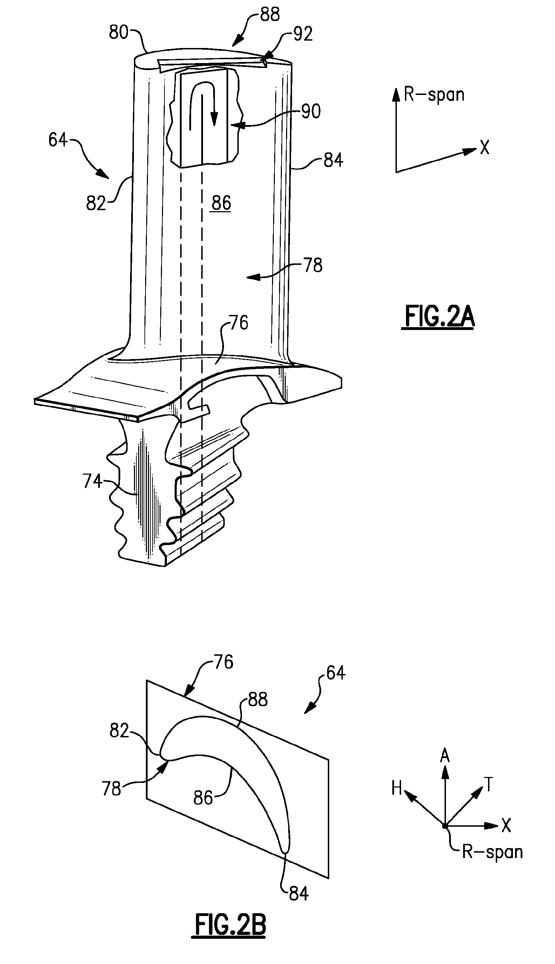

Referring to Figures 2A and 2B, a root 74 of each turbine blade 64 is mounted to the rotor disk. The turbine blade 64 includes a platform 76, which provides the inner flow path, supported by the root 74. An airfoil 78 extends in a radial direction R from the platform 76 to a tip 80. It should be understood that the turbine blades may be integrally formed with the rotor such that the roots are eliminated. In such a configuration, the platform is provided by the outer diameter of the rotor. The airfoil 78 provides leading and trailing edges 82, 84. The tip 80 is arranged adjacent to a blade outer air seal as is known.

The airfoil 78 of Figure 2B somewhat schematically illustrates an exterior airfoil surface extending in a chord-wise direction H from a leading edge 82 to a trailing edge 84. The airfoil 78 is provided between pressure (typically concave) and suction (typically convex) wall 86, 88 in an airfoil thickness direction T, which is generally perpendicular to the chord-wise direction H. Multiple turbine blades 64 are arranged circumferentially in a circumferential direction A. The airfoil 78 extends from the platform 76 in the radial direction R, or spanwise, to the tip 80.

The airfoil 78 includes a cooling passage 90 provided between the pressure and suction walls 86, 88. The exterior airfoil surface may include multiple film cooling holes on the airfoil 78 (not shown) in fluid communication with the cooling passage 90.

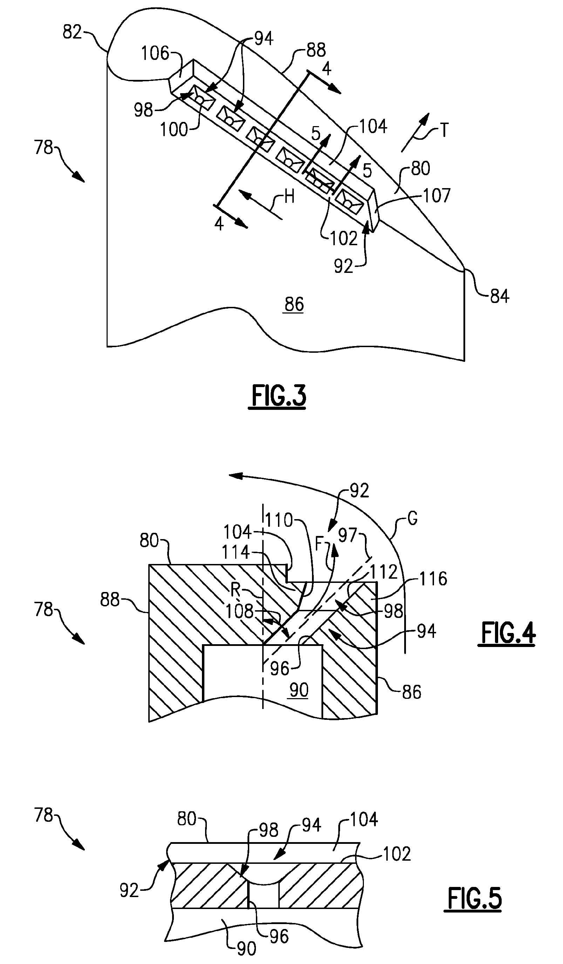

Referring to Figure 3, a shelf 92 is shown provided in the pressure side wall 86, although the disclosed shelf 92 may also be provided in a suction side wall 88. In the example, the shelf 92 is spaced from the leading edge 82 and the trailing edge 84. At least one film cooling hole 94, multiple holes shown, are provided in the shelf 92. The film cooling holes 94 fluidly communicate with the cooling passage 90.

The film cooling holes 94 extend at an angle 108 relative to the radial direction R, as shown in figure 4. Each film cooling hole 94 includes a metering portion 96 that extends along an axis 97 to a diffuser 98 at an outlet of the film cooling hole 94. The axis 97 and the radial direction R are arranged at an acute angle relative to one another. In the example, the metering portion 96 has a circular cross-section.

Returning to Figure 3, the shelf 92 includes first and second lateral surfaces 102, 104 that extend in the chord-wise direction H. The first surface 102 extends in the airfoil thickness direction T. The second surface 104 extends in the radial direction R. The diffuser 98 is provided in the first surface 102.

In the example, the diffuser 98 provides an exit with a perimeter 100 at the first surface 102 that is generally rectangular in shape, for example. The diffuser 98 has a length and a width, with the length greater than the width. The length extends in the chord-wise direction H. Four generally flat, trapezoidal sides transition from the metering hole 96 to the perimeter 100, as shown in Figures 3-5. The diffuser 98 is spaced from the pressure side exterior airfoil surface.

Two of the four flat sides of the diffuser 98 are provided by first and second faces 110, 112 that respectively provide inner and outer corners 114, 116 with the first surface 102. The inner corner is arranged near the second surface 104. The outer corner 116 is arranged near the pressure side exterior airfoil surface. The first face 110 is at an obtuse angle with the metering portion 96. The second face 112 is arranged linearly relative to the metering portion 96 and at a greater angle relative to the radial direction R than the first face 110.

As shown in Figure 4, the gases G flow from the pressure side wall 86 over the tip 80. The film cooling hole 94 is angled into the gases G such that the cooling fluid F is forced to turn radially, creating a boundary layer of cooling fluid at the shelf 92. With the angle of the film cooling hole 94 and the orientation of the diffuser faces 110, 112, the cooling fluid F has to turn less to align with the gases G, resulting in less film decay and better engine performance. This encourages the cooling fluid F to better attach to the shelf 92 rather than blow off the tip 80.

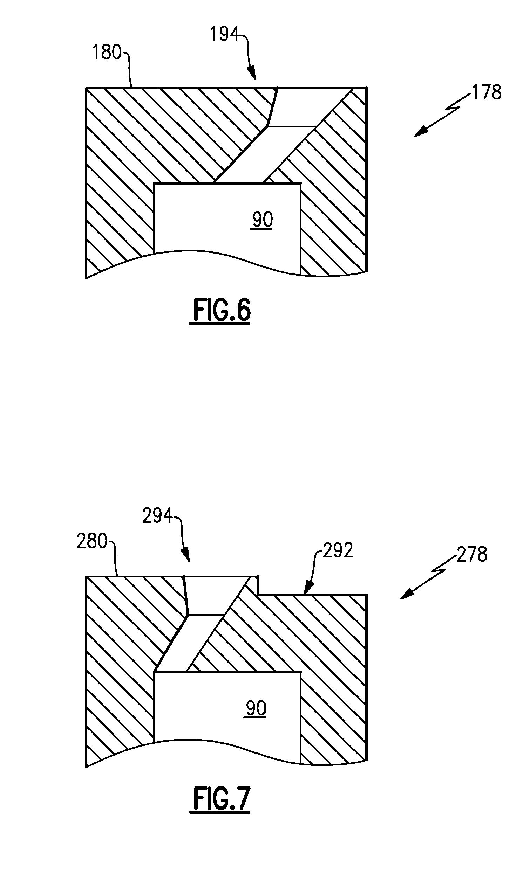

Another example airfoil 178 is shown in Figure 6. The tip 180 does not include a shelf, and the film cooling hole 194 fluidly connects the cooling passage 90 to a terminal end of the airfoil tip 180. In the example airfoil 278 shown in Figure 7, the tip 280 does included a shelf 292, however, the film cooling hole 194 is spaced from the shelf 292 to fluidly connect the terminal end of the tip 280 to the cooling passage 90.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. An airfoil (78; 178; 278) for a gas turbine engine (20) comprising:
pressure and suction walls (86, 88) spaced apart from one another and joined at leading and trailing edges (82, 84) to provide an airfoil (78; 178; 278) having an exterior surface that extends in a radial direction (R) to a tip (80; 180; 280); and
a film cooling hole (94; 194; 294) provided in the tip (80; 180; 280) extending at an angle relative to the radial direction (R), wherein the film cooling hole (94; 194; 294) includes a diffuser (98).

2. The airfoil (78; 178; 278) according to claim 1, wherein the film cooling hole (94) includes a metering portion (96) extending along an axis (97), the axis (97) and radial direction (R) arranged at an acute angle.

3. The airfoil (78; 178; 278) according to claim 2, wherein the diffuser (98) is spaced from the pressure side exterior airfoil surface.

4. The airfoil (78; 178; 278) according to claim 2 or 3, wherein the diffuser (98) includes first and second faces (110, 112) that respectively provide inner and outer corners (114, 116) with the tip (80; 180; 280), the inner corner (114) arranged farthest from and the outer corner (116) arranged nearest to the pressure side exterior airfoil surface, the first face (110) at an obtuse angle with the metering portion (96).

5. The airfoil (78; 178; 278) according to any preceding claim, wherein the tip (80; 180; 280) includes a shelf (92; 292), and the diffuser (98) is spaced from the shelf (92; 192).

6. The airfoil (78; 178; 278) of any of claims 1 to 4, further comprising a shelf (92; 292) provided in at least one of the pressure and suction side walls (86, 88) at the tip (80; 180; 280), wherein the film cooling hole (94) is provided in the shelf (92; 292).

7. The airfoil (78; 178; 278) according to claim 5 or 6, wherein the shelf (92; 292) is arranged on the pressure wall (86).

8. The airfoil (78; 178; 278) according to claim 7, wherein the shelf (92; 292) is spaced from the trailing edge (84).

9. The airfoil (78; 178; 278) according to claim 7 or 8, wherein the shelf (92; 292) is spaced from the leading edge (82).

10. The airfoil (78; 178; 278) according to any of claims 5 to 9, wherein the shelf (92; 292) includes first and second adjoining surfaces (102, 104) extending in a chord-wise direction (H), the first surface (102) extending in an airfoil thickness direction (T), and the second surface (104) extending in the radial direction (R), the diffuser (98) provided in the first surface (102).

11. The airfoil (78; 178; 278) according to any of claims 5 to 10, wherein the diffuser (98) includes first and second faces (110, 112) that respectively provide inner and outer corners (114, 116) with the first surface (102), the inner corner (114) arranged near the second surface (104), and the outer corner (116) arranged near the pressure side exterior airfoil surface, the first face (110) at an obtuse angle with the metering portion (96).

12. The airfoil (78; 178; 278) according to claim 4 or 11, wherein the second face (112) is arranged linearly relative to the metering portion (96) and at a greater angle relative to the radial direction (R) than the first face (110).

13. The airfoil (78; 178; 278) according to any preceding claim, wherein the diffuser (98) breaks the tip (80; 180; 280) or the first surface (102) at a perimeter that is generally rectangular in shape having a length and a width, the length greater than the width, the length extending in a/the chord-wise direction (H).

14. The airfoil (78; 178; 278) according to any preceding claim, wherein the airfoil (78; 178; 278) has a cooling passage (90) arranged between the pressure and suction walls (86, 88) that extends toward the tip (80; 180; 280), and the cooling hole (94; 194; 294) fluidly interconnecting the cooling passage (90) and the tip (80; 180; 280) and/or the shelf (92; 292).

15. The airfoil (78; 178; 278) according to any preceding claim, wherein multiple cooling holes (94) are provided in the tip (80; 180; 280) or the shelf (92; 292) along a chord-wise direction (H).
